# NEW EUROPEAN PATENT SPECIFICATION

(11) **EP 1 522 750 B2**
(45) Date of publication and mention of the opposition decision: **14.02.2018**
(45) Mention of the grant of the patent: 24.04.2013
(21) Application number: 03022653.4
(22) Date of filing: 06.10.2003
(51) Int. Cl.: F16C 33/10, F16C 33/20, B32B 15/01, C22C 21/00

(54) **Multi-layer sliding bearing**
Mehrschicht-Gleitlager
Palier lisse à plusieurs couches

(43) Date of publication of application: 13.04.2005
(73) Proprietor: Taiho Kogyo Co., Ltd, Toyota-shi, Aichi 471-8502 (JP); Miba Gleitlager Austria GmbH, 4663 Laakirchen (AT)
(72) Inventor: Kamiya, Soji, Toyota-shi, Aichi 471-8502 (JP); Kawagoe, Kimio, Toyota-shi, Aichi 471-8502 (JP); Lang, Hubert, c/o Miba Gleitlager GmbH, 4663 Laakirchen (AT)
(74) Representative: Kador & Partner

(56) References cited:
- EP-A1- 1 236 914
- WO-A1-02/10603
- WO-A2-98/17833
- DE-A1- 2 654 644
- DE-A1- 4 231 862
- GB-A- 2 252 565
- US-A1- 5 525 246
- US-A1- 20020 155 304
- US-B1- 6 305 847
- PATENT ABSTRACTS OF JAPAN vol. 2000, no. 04, 31 August 2000 (2000-08-31) & JP 2000 027868 A (MAN B &W DIESEL AS), 25 January 2000 (2000-01-25)
- PATENT ABSTRACTS OF JAPAN vol. 1998, no. 01, 30 January 1998 (1998-01-30) & JP 09 229070 A (NISSAN MOTOR CO LTD), 2 September 1997 (1997-09-02)

## Description

### Technical Field

The present invention relates to a multi-layer sliding bearing to be used in a large reciprocating engine, having a semi-spherical shape with inner diameter of 100 mm or more, a thrust washer and a rolled bushing.

### Background Technique

White metal has heretofore been used for the bearing of a large reciprocating engine and the like but has recently been mostly replaced with aluminum-based bearing alloy.

In Japanese Patent No. 2705781 is disclosed a sliding bearing to be used in a large-sized reciprocating engine, having a four-layer structure. That is, the sliding bearing consists of a steel backing layer, an intermediate layer consisting of pure Al or Al alloy, an Al-alloy bearing layer which contains more than 40% and up to 50% of Sn, more than 2% and up to 10% of Pb and 0.1 to 1.5% of Cu, and a surface layer consisting of Pb, Sn or an alloy mainly composed of these metals.

EP1236914A1 discloses a sliding bearing comprising a resin coating and an Al-alloy bearing layer, which may contain up to 20% of Sn. The invention of this European publication intends to improve the performance operated under high revolution. Seizure resistance is tested under 29MPa of load.

DE 19814756 A1 and Japanese Unexamined Patent Publication No. 2000-27868 discloses a resin coating on aluminum alloy containing 40% of Sn. Such bearing layer structure so far is only used to avoid assembly damage and not as a functional layer in bearing operation.

US2003059137 discloses a sliding bearing, wherein an overlay, which consists of at least one solid lubricant and a binder resin, covers an aluminium-alloy bearing layer bonded on backing metal, the overlay consists of an upper layer, which contains the solid lubricant essentially consisting of MoS₂, and a lower layer, which contains one or both of solid lubricant and hard additive. The solid lubricant of the lower layer is MoS₂ and its content is relatively lower than in the upper layer.

Meanwhile, the following alloys have been used for the sliding bearing of a large reciprocating engine and the like in Europe.
(1) Al-40% Sn alloy: A bimetal structure is provided by roll-bonding the bearing alloy onto the backing steel. This bearing has inner diameter of 750 mm or less and is used in a large two-stroke engine under 20 MPa or less of load.
(2) Al-20% Sn alloy. The bearing structure is the same as that of (1), mentioned above. The bearing has inner diameter of approximately 220 mm or more and is used under 40 MPa or less of load.
(3) Al-25% Sn alloy. This alloy is occasionally used as substitution material of (I) or (2), mentioned above, under approximately 60 MPa or less of load.

### Disclosure of Invention

High Sn-containing Al alloy has been used for a bearing of large reciprocating engine, as described in Japanese Patent No. 2705781 and as known from the European practice mentioned in items (1), (2) and (3), above. Meanwhile, since EP1236914A1 mentions Sn as one of alternative elements such as Sn, Pb, In, Tl and Bi, this publication does not disclose the application of its plain bearing for large reciprocating engine. In addition, the operation under high revolution is contrary to the operation of large reciprocating engine.

The seizure resistance and the fatigue resistance of the Al bearing alloy are insufficient as the performance of a large reciprocating engine is increasingly enhanced. Addition of such strengthening elements as Cu, Mn, Cr, Zr, Ni and Si has been tried as a measure to cope with the performance enhancement of a large reciprocating engine. The strengthening elements are sufficient for improving the load-carrying capacity and the fatigue resistance, but exert detrimental effects upon the conformability, the compatibility and the seizure-resistance. The so-provided bearing is not reliable in the light of the properties as a whole.

The present invention is based on recognition of the background as described above. It is, therefore, an object of the present invention to provide a sliding bearing to be used in a large reciprocating engine and having improved conformability, compatibility and seizure resistance.

The multi-layer sliding bearing according to the present invention is characterized in that a bearing layer consisting of aluminum-alloy having from 20 to 45 mass % of Sn, the balance being Al and unavoidable impurities, is roll-bonded via an intermediate layer consisting of pure aluminum or aluminum alloy, to a backing steel, and further an overlay, which consists of from 98 to 55 mass % of at least one solid lubricant selected from the group consisting of MoS₂, WS₂, BN and graphite, and from 2 to 45 mass % of at least one binder selected from the group consisting of polyimide resin, epoxy resin and phenol resin, is formed on the bearing layer.

The characterizing sliding conditions of a multi-layer sliding bearing in a large reciprocating engine compared with those of a medium or small sliding bearing used in a medium-size automobile are as follows. (a) The absolute value of the load is high. However, the unit load usually expressed in terms of MPa is at approximately the same level as or lower than that of a the medium or small-sized bearing, particularly in a case where the inner diameter of a bearing is so high as mentioned in the European practice (1), mentioned above. The unit load mentioned above is usually simply referred to as load. (b) Stationary operation as compared with variable operation of a medium-sized bearing. (c) Fluid lubrication as compared with boundary lubrication of a medium-sized bearing. (d) The sliding speed of a bearing relative to a shaft is approximately the same as that of the medium-sized bearing. (e) The temperature of lubricating oil is lower than that of a medium-sized bearing. (f) Since the size of an engine is large, the misalignment of the bearing and journal deflection is also large.

The addition of such strengthening elements of the aluminum matrix as Cu and Mg is not effective for enhancing the sliding performance of a bearing alloy operated under condition (f), mentioned above.

The present invention is described hereinafter in detail.

The aluminum-alloy bearing layer according to the present invention contains from 20 to 45 mass % of Sn, the balance being Al and unavoidable impurities.

Sn is a fundamental element for enhancing the bearing properties. More specifically, Si, Cu, Cr and the like, which are added to most of aluminum alloys for a bearing, are not essential, under the sliding conditions (b), (d) and (e). Rather, the performance under these conditions (b), (d) and (e) can be ensured by means of adding a large amount of Sn. When the content of Sn is less than 20% (the percentage of component is by mass %), the conformability, the compatibility, the seizure resistance and embedding property to embed the foreign particles are poor. On the other hand, when the Sn content is more than 45%, the strength is excessively lowered such that fatigue resistance can not be ensured. In a case where the importance is attached to the fatigue resistance, the Sn content is preferably from 25 to 27%. In a case, where the importance is attached to the seizure resistance and the compatibility, the Sn content is preferably from 35 to 45%.

One or more elements selected from the group consisting of Cu, Mg, Cr, Si, Mn, Ni, V, Ti, Zn, Pb, In and Bi may be added, if necessary, to the Al-Sn based alloy according to the present invention. The addition amount is from 0.1 to 5%.

Among these elements, Cr is present in the form of fine particles in the alloy and prevents the Sn phase from coarsening during the operation of a bearing. Si, Mn, Ni, V and Ti are also present in the form of fine particles and enhance the wear resistance. Namely, these elements are effective for maintaining the bearing performance after the compatible surface is formed on the bearing and the bearing layer is partly exposed.

Cu and Zn are dissolved in the aluminum matrix and strengthen the aluminum alloy. Mg precipitates under the co-presence with Si and enhances the strength. Mg alone solution strengthens the alloy. These Cu, Zn, Mg and Si are effective for enhancing the bearing performance under the condition (e), as the temperature of the oil rises.

In and Bi improve the compatibility.

When the addition amount of one or more of these elements is less than 0.1%, the effects of the addition are slight. On the other hand, when the addition amount of one or more of these elements is more than 5%, there is no improvement of the performance of a bearing, because of its lower melting point of eutectic.

The thickness of an aluminum-alloy bearing layer is usually from 1/8 to 1/3 of that of the backing metal.

The backing metal is usually made of a sheet of low-carbon steel or alloy steel and is usually from 1.2 mm to 20 mm thick.

The intermediate layer ensures the bonding strength between the aluminum-alloy bearing layer and the backing metal. In order to attain such function, a soft metal, which is easily deformable in the roll bonding and has excellent bonding property with both the bearing alloy and the backing metal, should be used. For example, pure aluminum or aluminum alloy having 2% or less of Cu, Si, Mn, Zn and/or Mg in combination or alone, can be used as the intermediate layer. The intermediate layer is usually from 0.02 to 0.6 mm thick.

The overlay according to the present invention is hereinafter described.

The overlay according to the present invention consists of from 98 to 55 mass % of at least one solid lubricant selected from the group consisting of MoS₂, WS₂, BN and graphite, and from 2 to 45 mass % of at least one binder selected from the group consisting of polyimide resin, epoxy resin and phenol resin. When the content of the solid lubricant is less than 55%, the solid lubricant is not effective for enhancing the conformability and the compatibility. On the other hand, when the content of the solid lubricant is more than 98%, the bonding strength and layer strength of the overlay is poor. The content of solid lubricant is preferably from 60 to 80%, more preferably from 65 to 75%. The size of solid lubricant is preferably 5µm or less, preferably 1µm or less.

The binder resin is selected from the group consisting of polyimide resin, epoxy resin and phenol resin. The polyimide resin may be aromatic polyimide, polyether imide, polyester imide, or aromatic polyimide amide. The polyimide resin may also be one or more of the polyimide resins mentioned above, modified by di-isoyanate, BPDA or sulfon.

The epoxy resin may be the one having epoxy compound or silane coupling agent.

One or more of the friction-controlling agents selected from the group consisting of SiC, Si₃N₄, CrO₂, TiO₂ may be contained, if necessary, in the overlay according to the present invention. The addition amount of the friction-controlling agent is from 0.1 to 5%. The friction-controlling agent has two opposite functions. That is, it increases the coefficient of friction of the overlay and increases the abrasion wear, while it mitigates the adhesive tendency and decreases the adhesion wear. The desirable function of the overlay is such that the compatible surface should not be formed too early or too late. The friction-controlling agent enables generation of the desirable compatible function. When the addition amount is less than 0.1%, the effects are not satisfactory. On the other hand, when the addition amount is more than 5%, the compatibility of the overlay is lowered.

The overlay is preferably from 3 to 30µm thick.

The overlay is formed by means of spraying the solid lubricant and resin, and, if necessary, a solvent, through a spraying gun. The electrostatic coating, the roll-coating, the pad printing and the like may also be used for forming the overlay. Contrary to this, the known metallic overlay, e.g., Pb or Sn overlay is formed by electroplating. Although the material properties of the metallic overlay except for fatigue resistance are excellent, when it is formed on the inner surface of a bearing used for a large reciprocating engine, variation in the thickness of the overlay becomes so large that desirable fluid lubrication condition is not realized on the sliding surface not with standing excellent material properties.

In addition, since long life is important in a sliding bearing of a large reciprocating engine, the solid-lubricant overlay is superior to the metallic overlay, which is liable to fatigue.

The layer of solid lubricant and binder is cured usually at a temperature of from 180 to 230°C.

In the present invention, a solid-lubricant overlay is formed on the aluminum-alloy bearing layer, which exhibits relatively poor conformability, compatibility, seizure resistance and embedding property but has excellent fatigue property.
As a result, the conformability, the compatibility, the seizure resistance and embedding property are improved.

### Example 1

The following aluminum-bearing alloy/overlay structure was formed on the bimetal consisting of a backing steel sheet (SPCC) and an intermediate layer (pure aluminum, 0.5µm thick). As a result, the four layers were formed in the inventive case of ① and ②, while three layers were provided in the comparative case A and B.
① Al-40%Sn/PAl-68%MoS₂-2%SiC (reference example)
② Al-25%Sn-1%Cu-0.6%Mn/PAl-70%MoS₂ (reference example)
A. Al-40%Sn/no overlay (comparative example)
B. Al-25%Sn-1%Cu-0.6%Mn/no overlay (comparative example)

The aluminum-alloy sheets were formed by belt casting and then laminated on the intermediate layer made of pure Al sheet and a backing sheet. The three layers were then rolled for bonding. The roll-bonded sheets were cut into 21 mm wide samples to form a semi-spherical bearing with 48 mm of radius, not being according to the invention. These samples were then bent to the semi-spherical shape. The surface roughness of the aluminum-alloy bearing layer was 1.5 µmRz. The overlay mixture of the solid lubricant and resin was sprayed onto the aluminum-alloy bearing layer from a spraying gun, which was reciprocated along the width of the sheet, while displacing along the circumferential circle of the semi-spherical bearing sheet. Sub-sequently, baking was carried out at 220°C.

The seizure-resistance test was carried out under the following conditions.
Hydraulic static load seizure-tester
Clearance: 1.40/00
Revolution Number: 5000 rpm
Circumferential Speed: 12.6 m/s
Lubricating Oil Rimula TX10 (Product of Shell Petroleum Co., Ltd.)
Oil Temperature: 120°C
Oil Feeding Rate: 1.1 Litre/minute
Oil Pressure: 0.7 bar
Load: 2.85kN/1minute 45 second, successive increase

The test results are shown in Table 1, in which the seizure load of the comparative examples is standardized as 100.

**Table 1**

| | Seizure Surface Pressure | Remarks |
|---|---|---|
| Sample A | 100MPa | Comparative |
| Sample ① | 105.7MPa | Reference |
| Sample B | 100 MPa | Comparative |
| Sample ② | 114 MPa | Reference |

From the comparison of Sample A with ① and Sample B with ②, it is shown that the seizure resistance is enhanced by the present invention.

### Industrial Applicability

As is described hereinabove, the compatibility, the conformability and the seizure resistance of a sliding bearing for use in a large-sized engine are improved.

## Claims

1. A multi-layer sliding bearing to be used in a large reciprocating engine, **characterized in that** a bearing layer consisting of aluminum-alloy having from 20 to 45 mass % of Sn, and optionally containing from 0.1 to 5 mass % of at least one element selected from the group consisting of Cu, Mg, Cr, Si, Mn, Ni, V, Ti, Zn, Pb, In and Bi, the balance being Al and unavoidable impurities, is roll-bonded via an intermediate layer consisting of pure aluminum or aluminum alloy, to a backing metal, and further, an overlay, which consists of from 98 to 55 mass % of at least one solid lubricant selected from the group consisting of MoS₂, WS₂, BN and graphite, and from 2 to 45 mass % of at least one binder selected from the group consisting of polyimide resin, epoxy resin and phenol resin, is formed on the bearing layer, wherein
said multi-layer sliding bearing has a semi-spherical shape with an inner diameter of 100 mm or more.

2. A multi-layer sliding bearing according to claim 1, **characterized in that** said overlay has a thickness of from 3 to 30 µm.

3. A multi-layer sliding bearing according to claim 1 or 2, **characterized in that** said overlay is formed by spraying, electrostatic coating, roll printing or pad printing.

## Patentansprüche

1. Mehrschichtgleitlager zur Verwendung in einer großen Kolbenmaschine, **dadurch gekennzeichnet, dass** eine Lagerschicht, bestehend aus Aluminiumlegierung, die 20 bis 45 Massen-% Sn aufweist und optional 0,1 bis 5 Massen-% von mindestens einem Element, ausgewählt aus der Gruppe, bestehend aus Cu, Mg, Cr, Si, Mn, Ni, V, Ti, Zn, Pb, In und Bi, enthält, wobei der Ausgleich Al und unvermeidbare Verunreinigungen sind, über eine Zwischenschicht, die aus reinem Aluminium oder Aluminiumlegierung besteht, auf ein Stützmaterial walzplattiert ist und ferner auf der Lagerschicht eine Deckschicht ausgebildet ist, die aus 98 bis 55 Massen-% von mindestens einem festen Schmiermittel, ausgewählt aus der Gruppe, bestehend aus MoS₂, WS₂, BN und Graphit, und 2 bis 45 Massen-% von mindestens einem Bindemittel, ausgewählt aus der Gruppe, bestehend aus Polyimidharz, Epoxidharz und Phenolharz, besteht, wobei
das Mehrschichtgleitlager eine halbkugelförmige Form mit einem Innendurchmesser von 100 mm oder mehr aufweist.

2. Mehrschichtgleitlager nach Anspruch 1, **dadurch gekennzeichnet, dass** die Deckschicht eine Dicke von 3 bis 30 µm aufweist.

3. Mehrschichtgleitlager nach Anspruch 1 oder 2, **dadurch gekennzeichnet, dass** die Deckschicht durch Sprühen, elektrostatisches Beschichteten, Walzendruck oder Tampondruck gebildet wird.

## Revendications

1. Palier lisse à plusieurs couches à utiliser dans un moteur alternatif de grande taille, **caractérisé en ce qu'**une couche antifriction constituée d'un alliage à base d'aluminium comportant de 20 à 45 % en masse de Sn, et contenant facultativement de 0,1 à 5 % en masse d'au moins un élément choisi dans le groupe constitué du Cu, du Mg, du Cr, du Si, du Mn, du Ni, du V, du Ti, du Zn, du Pb, de l'In et du Bi, le reste étant constitué d'AI et d'impuretés inévitables, est liée par laminage via une couche intermédiaire constituée d'aluminium pur ou d'un alliage à base d'aluminium, à un métal de support, et en outre, une couche de revêtement, qui est constituée de 98 à 55 % en masse d'au moins un lubrifiant solide choisi dans le groupe constitué du MoS₂, du WS₂, du BN et du graphite, et de 2 à 45 % en masse d'au moins un liant choisi dans le groupe constitué d'une résine de polyimide, d'une résine époxy et d'une résine de phénol, est formée sur la couche antifriction, dans lequel
ledit palier lisse à plusieurs couches a une forme semi-sphérique d'un diamètre intérieur de 100 mm ou plus.

2. Palier lisse à plusieurs couches selon la revendication 1, **caractérisé en ce que** ladite couche de revêtement a une épaisseur de 3 à 30 µm.

3. Palier lisse à plusieurs couches selon la revendication 1 ou 2, **caractérisé en ce que** ladite couche de revêtement est formée par pulvérisation, revêtement électrostatique, impression au rouleau ou impression au tampon.
